# EUROPÄISCHE PATENTSCHRIFT

(11) **EP 0 787 215 B1**
(45) Veröffentlichungstag und Bekanntmachung des Hinweises auf die Patenterteilung: **12.08.1998**
(21) Anmeldenummer: 95944801.0
(22) Anmeldetag: 12.10.1995
(51) Int. Cl.: C21B 13/14

(54) **VERFAHREN ZUR HERSTELLUNG VON FLÜSSIGEM ROHEISEN ODER FLÜSSIGEN STAHLVORPRODUKTEN UND EISENSCHWAMM SOWIE ANLAGE ZUR DURCHFÜHRUNG DES VERFAHRENS**
PROCESS FOR PRODUCING LIQUID RAY IRON OR STEEL BASIC PRODUCTS AND IRON SPONGE AND PLANT FOR IMPLEMENTING IT
PROCEDE DE PRODUCTION DE FONTE BRUTE LIQUIDE OU D'EBAUCHES EN ACIER LIQUIDES ET DE FER SPONGIEUX, ET INSTALLATION DE MISE EN OEUVRE DUDIT PROCEDE

(30) Priorität: 17.10.1994 AT 1958/94; 25.04.1995 AT 709/95; 25.04.1995 AT 710/95
(43) Veröffentlichungstag der Anmeldung: 06.08.1997
(73) Patentinhaber: VOEST-ALPINE INDUSTRIEANLAGENBAU GMBH, 4020 Linz (AT)
(72) Erfinder: DIEHL, Jörg, A-4040 Linz (AT); ROSENFELLNER, Gerald, A-3352 St. Peter/Au (AT); KEPPLINGER, Leopold, Werner, A-4060 Leonding (AT); MILIONIS, Konstantin, A-8413 St. Georgen a/d Stiefling 122 (AT); SIUKA, Dieter, A-4501 Neuhofen (AT); WIESINGER, Horst, A-4020 Linz (AT)
(74) Vertreter: Kopecky, Helmut, Dipl.-Ing. Kopecky & Schwarz Patentanwälte
(86) Internationale Anmeldenummer: AT9500198
(87) Internationale Veröffentlichungsnummer: WO9612044

(56) Entgegenhaltungen:
- EP-A- 0 487 856
- AT-B- 396 255

## Beschreibung

Die Erfindung betrifft ein Verfahren zur Herstellung von flüssigem Roheisen oder flüssigen Stahlvorprodukten und Eisenschwamm aus von Eisenerz, vorzugsweise in Stück- und/oder Pelletform, und gegebenenfalls Zuschlägen gebildeten Einsatzstoffen, wobei die Einsatzstoffe in einer ersten Reduktionszone zu Eisenschwamm direkt reduziert werden, der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, welches in die erste Reduktionszone eingeleitet, dort umgesetzt und als Exportgas abgezogen wird, und wobei das abgezogene Exportgas einer CO₂-Eliminierung unterzogen und als zumindest weitgehend CO₂-freies Reduktionsgas gemeinsam mit einem Teil des in der Einschmelzvergasungszone gebildeten Reduktionsgases zur Erzeugung von Eisenschwamm ausschließlich einer weiteren Reduktionszone zur Direktreduktion von Eisenerz zugeführt wird, sowie eine Anlage zur Durchführung des Verfahrens.

Ein Verfahren dieser Art ist aus der AT-B - 396.255 bekannt. Hierbei wird der Teil des in der Einschmelzvergasungszone gebildeten Reduktionsgases, der als Überschußgas anfällt und der weiteren Reduktionszone zugeführt wird, in einem Wäscher gewaschen, anschließend mit dem Exportgas vermischt und schließlich gemeinsam mit dem Exportgas einer CO₂-Entfernung unterzogen. Die Zumischung dieses Teiles des Reduktionsgases zum Exportgas erfolgt somit vor der CO₂-Entfernung, so daß die beiden Reduktionsprozesse - die jeder für sich ein Schwingungen unterworfenes System verkörpern - an einer Stelle miteinander verknüpft sind, die - vom Gasstrom her gesehen - knapp nach dem ersten Reduktionsprozeß und weit vom zweiten Prozeß liegt. Hierdurch ist es möglich, Auswirkungen von Schwingungsübertragungen zwischen den Systemen, Resonanzen und Rückkopplungen betreffend Gasmengendurchsätze, Gaszusammensetzungen und Gastemperaturen gering zu halten bzw. zu vermeiden, u.zw. durch ein Vergleichmäßigen bzw. Dämpfen der Abweichungen von den vorgesehenen gewünschten Werten. Z.B. ergeben sich Gasvolumens- und Gasströmungsschwankungen aus der Forderung, den Systemdruck des Einschmelzvergasers zwecks Erzeugung eines Reduktionsgases von gleichbleibender Qualität konstant zu halten. Sobald der Druck im Einschmelzvergaser zu hoch wird, erfolgt eine Entspannung durch vermehrtes Einleiten von Reduktionsgas in die Exportgasleitung.

Die Dimensionierung einer CO₂-Entfernungsanlage richtet sich neben anderen Kriterien wesentlich nach dem dieser Anlage zugeführten Volumensstrom, wobei gemäß der AT-B-396,255 der Reduktionsgasstrom, mit dem maximal gerechnet werden muß, Berücksichtigung finden muß. Da die CO₂-Entfernungsanlage einen wesentlichen Anteil an den Gesamtinvestitionen einer Anlage zur Durchführung eines einleitend beschriebenen Verfahrens ausmacht, sind die Investitionskosten für eine Anlage gemäß der AT-B - 396.255 sehr hoch.

Die Erfindung stellt sich die Aufgabe, das aus der AT-B - 396.255 bekannte Verfahren und die aus diesem Dokument bekannte Anlage dahingehend weiterzuentwickeln, daß eine wesentliche Einsparung an Investitionskosten möglich ist. Insbesondere soll auch eine Herabsetzung der zur Herstellung des Produktes eingesetzten Energie möglich sein.

Dieses Ziel der Erfindung wird bei einem Verfahren der eingangs beschriebenen Art dadurch erreicht, daß von dem Teil des in der Einschmelzvergasungszone erzeugten und ausschließlich der weiteren Reduktionszone zugeführten Reduktionsgases ein Teil abgezweigt und der weiteren Reduktionszone unter Umgehung der CO₂-Eliminierung zugeleitet wird und daß das der CO₂-Eliminierung unterzogene Exportgas aufgeheizt wird.

Erfindungsgemäß kann somit eine Anlage zur CO₂-Eliminierung für eine erheblich geringere Kapazität bemessen werden, wodurch sich die Investitionskosten erheblich erniedrigen. Überraschenderweise zeigt sich, daß eine Verlegung der Verknüpfungsstelle der beiden Reduktionsprozesse näher zur weiteren Reduktionszone keine den Gesamtprozeß störenden Folgen zeigt. Für den Fall, daß mit erheblichen Gasvolumens- bzw. Gasströmungsschwankungen zu rechnen ist, ist eine Schwingungsdämpfung durch Sicherungsmaßnahmen, wie eine Pufferung, möglich, so daß auch in diesem Fall die erfindungsgemäß erzielten Vorteile voll zum Tragen kommen.

In der prioritätsälteren österreichischen Patentanmeldung A 1958/94 ist ein Verfahren beschrieben, bei dem Stückerz in einer Festbett-Direktreduktionszone zu Eisenschwamm reduziert wird, der Eisenschwamm in einer Einschmelzvergasungszone unter Zufuhr von Kohlenstoffträgern und sauerstoffhältigem Gas erschmolzen und ein CO und H₂-hältiges Reduktionsgas erzeugt wird, das in die Festbett-Direktreduktionszone eingeleitet, dort umgesetzt und als Topgas abgezogen wird, und Feinerz in einer Wirbelbett-Direktreduktionszone im Wirbelbett-Verfahren zu Eisenschwamm reduziert wird, wobei der Wirbelbett-Direktreduktionszone Topgas aus der Festbett-Direktreduktionszone und/oder in der Einschmelzvergasungszone erzeugtes Reduktionsgas, die einer CO₂-Entfernung und einer Aufheizung unterzogen werden, sowie in der Wirbelbett-Direktreduktionszone entstehendes Abgas zugeführt und als Abgas abgezogen wird. Hierbei kann das in der Einschmelzvergasungszone gebildete Reduktionsgas unter Umgehung der CO₂-Entfernung der Wirbelbett-Direktreduktionszone zugeführt werden.

Aus der EP-A - 0 487 856 ist ein Verfahren zur Herstellung von Roheisen bzw. Eisenschwamm bekannt, bei dem in einer Einschmelzvergasungszone Reduktionsgas gebildet wird, das in gleicher Weise sowohl einer ersten als auch einer weiteren Reduktionszone, die in Parallelschaltung angeordnet sind, zugeführt wird. Das aus beiden Reduktionszonen abgezogene Topgas wird einer CO₂-Wäsche unterworfen und das von CO₂ gereinigte Topgas dem Einschmelzvergaser als auch wiederum in gleicher Weise sowohl der ersten als auch der weiteren Reduktionszone zugeführt.

Eine bevorzugte erfindungsgemäße Variante ist dadurch gekennzeichnet, daß in der weiteren Reduktionszone Eisenschwamm nach dem Festbett-Verfahren aus Eisenerz, vorzugsweise in Stück- und/oder Pelletform, erzeugt wird.

Vorteilhaft wird erfindungsgemäß der abgezweigte Teil des Reduktionsgases vor Einleitung in die weitere Festbett-Direktreduktionszone mit dem der CO₂-Eliminierung unterzogenen Exportgas unter Bildung eines Misch-Reduktionsgases vermischt.

Wenn auf eine besondere Staubfreiheit des Reduktionsgases, das der Festbett-Direktreduktionszone zugeführt wird, Wert gelegt wird, ist es vorteilhaft, daß der abgezweigte Teil des Reduktionsgases einer Entstaubung und einer Wäsche unterzogen wird und das Misch-Reduktionsgas einer Aufheizung unterworfen wird.

Eine weitere wesentliche Einsparung an Investitionskosten und an Energieaufwand für die Herstellung des Roheisens bzw. Stahlvorproduktes läßt sich dadurch erzielen, daß nur das der CO₂-Eliminierung unterzogene Exportgas einer Aufheizung unterzogen wird und nach dem Aufheizen mit dem abgezweigten Teil des Reduktionsgases, das sowohl die CO₂-Eliminierung als auch die Aufheizung umgeht, vermischt wird, wobei vorteilhaft der abgezweigte Teil des Reduktionsgases lediglich einer Entstaubung, jedoch keiner Wäsche, unterzogen wird.

Hierbei wird also der abgezweigte Teil des Reduktionsgases lediglich einer Grobreinigung unterzogen und in sehr heißem Zustand mit dem der Aufheizung unterzogenen Exportgas gemischt. Somit kann die Einrichtung zur Aufheizung wesentlich kleiner dimensioniert werden, da ein wesentlich geringerer Volumensstrom an Gas aufzuheizen ist. Zudem bewirkt das noch heiße abgezweigte Reduktionsgas, daß das Exportgas nur auf eine geringere Temperatur aufgeheizt werden muß.

Der im abgezweigten Reduktionsgas noch enthaltene Reststaubgehalt wird durch die Zumischung zu dem aufgeheizten Exportgas derart verdünnt, daß keine Beeinträchtigung der Reduktion in der Festbett-Direktreduktionszone stattfindet.

Eine bevorzugte Variante ist dadurch gekennzeichnet, daß der abgezweigte Teil des Reduktionsgases einer Entstaubung und einer Wäsche unterzogen wird und das der CO₂-Eliminierung unterzogene Exportgas auf eine Temperatur aufgeheizt wird, die etwas über der gewünschten Reduktionsgastemperatur für die weitere Reduktionszone liegt. Hierdurch gelingt es, den abgezweigten Teil des Reduktionsgases in sehr reinem, jedoch kühlerem Zustand dem von CO₂ gereinigten Exportgas zuzumischen, wobei jedoch die Investitionskosten für die Heizeinrichtung gegenüber dem Stand der Technik niedriger sind. Das Verfahren ist zudem einfach durchführbar, da das abgezweigte Reduktionsgas in kühlerem Zustand leichter handhabbar ist und daher auch nur geringe Anlageninvestitionen erfordert

Vorteilhaft wird zwecks Konstanthaltung der Systemdrücke und Volumsströme der abgezweigte Teil des Reduktionsgases hinsichtlich eines Überschusses vor Einleitung in die weitere Reduktionszone gespeichert.

Zur Minimierung von Schwingungsübertragungen von einem Reduktionsprozeß zum anderen werden vorteilhaft Druckschwankungen in der Einschmelzvergasungszone durch Zumischen eines Teiles des in der Einschmelzvergasungszone gebildeten Reduktionsgases zum aus der Reduktionszone abgezogenen Exportgas vor Durchführung der CO₂-Eliminierung des Exportgases ausgeglichen.

Vorteilhaft wird in der weiteren Reduktionszone Feinerz im Wirbelbettverfahren reduziert und das abgezweigte Reduktionsgas der weiteren Reduktionszone unter Umgehung der Aufheizung des Exportgases zugeleitet, wobei zweckmäßig die Direktreduktion im Wirbelbettverfahren zwei- oder mehrstufig durchgeführt wird.

Eine Anlage zur Durchführung des Verfahrens mit einem Reduktionsofen für Eisenerz, vorzugsweise in Stück- und/oder Pelletform, einem Einschmelzvergaser, einer den Einschmelzvergaser mit dem Reduktionsofen verbindenden Zuleitung für ein Reduktionsgas, einer den Reduktionsofen mit dem Einschmelzvergaser verbindenden Förderleitung für das im Reduktionsofen gebildete Reduktionsprodukt, mit einer vom Reduktionsofen ausgehenden Exportgas-Ableitung, die in eine CO₂-Eliminierungsanlage mündet, mit in den Einschmelzvergaser mündenden Zuleitungen für sauerstoffhältige Gase und Kohlenstoffträger, einem am Einschmelzvergaser vorgesehenen Abstich für Roheisen und Schlacke, und mit mindestens einem zusätzlichen Reduktionsreaktor zur Aufnahme von Eisenerz, einer von der CO₂-Eliminierungsanlage ausgehenden Reduktionsgas-Zuleitung zu diesem Reduktionsreaktor, wobei die CO₂-Eliminierungsanlage ausschließlich mit dem zusätzlichen Reduktionsreaktor leitungsmäßig verbunden ist, einer Abgas-Ableitung aus diesem Reduktionsreaktor und einer Austragsvorrichtung für das in diesem Reduktionsreaktor gebildete Reduktionsprodukt, ist dadurch gekennzeichnet, daß die Reduktionsgas-Zuleitung des zusätzlichen Reduktionsreaktors über eine Heizeinrichtung für das von CO₂ gereinigte Exportgas in den zusätzlichen Reduktionsreaktor mündet, und daß von der den Einschmelzvergaser mit dem Reduktionsofen verbindenden Zuleitung für das Reduktionsgas eine Zweigleitung ausgeht, die unter Umgehung der CO₂-Eliminierungsanlage in die Reduktionsgas-Zuleitung des zusätzlichen Reduktionsreaktors mündet.

Zweckmäßig ist der zusätzliche Reduktionsreaktor als Festbettreaktor, insbesondere als Schachtofen, ausgebildet.

Gemäß einer bevorzugten Ausführungsform mündet die Zweigleitung sowohl unter Umgehung der CO₂-Eliminierungsanlage als auch unter Umgehung der Heizeinrichtung, die gegebenenfalls eine Nachverbrennungseinrichtung inkludiert, in die Reduktionsgas-Zuleitung des zusätzlichen Festbettreaktors.

Gemäß einer bevorzugten Ausführungsform ist der zusätzliche Reduktionsreaktor als Wirbelbettreaktor ausgebildet, wobei vorteilhaft zwei oder mehr Wirbelbettreaktoren in Serie geschaltet vorgesehen sind.

Vorteilhaft ist in der Abzweigleitung ein Pufferspeicher vorgesehen, wobei zweckmäßig der Pufferspeicher mit einer Bypass-Leitung überbrückbar ist.

Zur Minimierung von Schwingungsübertragungen zwischen den beiden Reduktionsprozessen ist zweckmäßig die Zweigleitung über eine Ausgleichsleitung mit der Exportgasableitung vor Einmünden derselben in die CO₂-Eliminierungsanlage verbindbar.

Die Erfindung betrifft weiters ein Verfahren zur Herstellung eines handelsfähigen Produktes, wie Walzgut, erzeugt aus Roheisen oder Stahlvorprodukten hergestellt nach dem erfindungsgemäßen Verfahren.

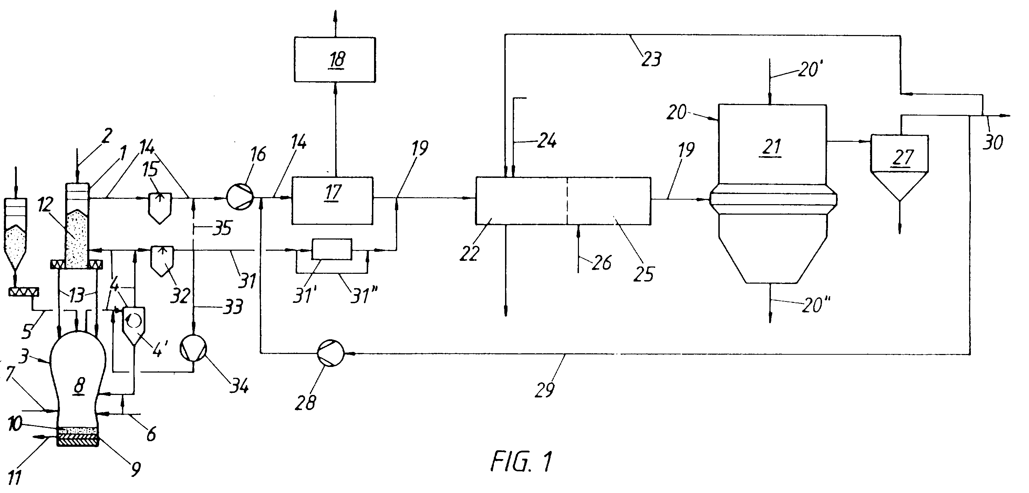

Die Erfindung ist nachfolgend anhand dreier in der Zeichnung schematisch dargestellter Ausführungsbeispiele näher erläutert, wobei die in der Zeichnung dargestellten Fig. 1 bis 3 jeweils das Verfahrensschema nach je einer Ausführungsform der Erfindung veranschaulichen.

In einen ersten, einen Festbettreaktor bildenden Reduktions-Schachtofen 1 wird von oben über eine Fördereinrichtung 2 stückiges Eisenerz und/oder Eisenerz in Pelletform über ein nicht dargestelltes Schleusensystem, gegebenenfalls zusammen mit Zuschlagstoffen, chargiert. Der Schachtofen 1 steht mit einem Einschmelzvergaser 3 in Verbindung, in dem aus Kohle und sauerstoffhältigem Gas ein Reduktionsgas erzeugt wird, welches über eine Zuleitung 4 dem Schachtofen 1 zugeführt wird, wobei in der Zuleitung 4 gegebenenfalls eine Gasreinigungseinrichtung 4' für eine Trocken-Entstaubung vorgesehen ist.

Der Einschmelzvergaser 3 weist eine Zuführung 5 für feste Kohlenstoffträger, eine Zuführung 6 für sauerstoffhältige Gase sowie gegebenenfalls Zuführungen 7 für bei Raumtemperatur flüssige oder gasförmige Kohlenstoffträger, wie Kohlenwasserstoffe, sowie für gebrannte Zuschläge auf. In dem Einschmelzvergaser 3 sammelt sich unterhalb der Einschmelzvergasungszone 8 schmelzflüssiges Roheisen 9 und schmelzflüssige Schlacke 10, die über einen Abstich 11 abgestochen werden.

Das im Schachtofen 1 in einer Festbett-Direktreduktionszone 12, also im Festbettverfahren, zu Eisenschwamm reduzierte Eisenerz wird zusammen mit den in der Direktreduktionszone 12 gebrannten Zuschlägen über eine den Schachtofen 1 mit dem Einschmelzvergaser 3 verbindende Förderleitung 13 zugeführt, beispielsweise mittels Austragsschnecken etc.. An dem oberen Teil des Schachtofens schließt eine Exportgas-Ableitung 14 für das in der Direktreduktionszone 12 aus Reduktionsgas entstehende Topgas an.

Das über die Exportgas-Ableitung 14 abgezogene Topgas wird zunächst einer Reinigung in einem Wäscher 15 unterzogen, um es möglichst vollständig von Staubpartikeln zu befreien und den Wasserdampfgehalt zu erniedrigen, so daß es dann als Exportgas einer weiteren Verwendung zur Verfügung steht. Anschließend gelangt das Exportgas mit Hilfe eines Verdichters 16 in eine CO₂-Eliminierungs- bzw. -Entfernungsanlage 17 (z.B. ein CO₂-Wäscher oder eine Druckwechsel-Adsorptionsanlage), in der es möglichst weitgehend von CO₂ befreit wird. Das aus der CO₂-Entfernungsanlage 17 austretende Abgas wird gegebenenfalls einer Entschwefelungeinrichtung 18 zugeführt. Das so von CO₂ gereinigte Exportgas wird über eine Reduktionsgas-Zuleitung 19 einem zweiten, als Reduktions-Schachtofen 20 ausgebildeten Festbettreaktor, der wie der erste Schachtofen 1 ebenfalls im Gegenstromprinzip arbeitet, zugeführt. In diesem zweiten Schachtofen 20 wird Eisenerz in Stück- und/oder Pelletform ebenfalls in einer Festbett-Reduktionszone 21 direktreduziert. Die Erzzuleitung ist mit 20' und die Eisenschwammausbringeinrichtung mit 20'' bezeichnet.

Da das Exportgas durch die Reinigung eine starke Abkühlung erfahren hat, wird es vor Einleitung in den zweiten Reduktions-Schachtofen 20 einer Aufheizung unterzogen. Die Aufheizung erfolgt in zwei Stufen: Zunächst wird das gereinigte Exportgas in einer ersten Stufe einer indirekten Aufheizung unterzogen, wobei eine hierzu dienende Heizeinrichtung 22 als Wärmetauscher ausgebildet ist. Der Wärmetauscher 22 (Rekuperator) wird mit gereinigtem Exportgas, das aus dem zweiten Reduktions-Schachtofen 20 über eine Leitung 23 abgezogen wird, betrieben. Zusätzlich wird noch über eine Leitung 24 sauerstoffhältiges Gas (Sauerstoff liegt in Molekülform vor), wie Luft, dem Brenner des Wärmetauschers 22 zugeführt. Anschließend wird das aufgeheizte Exportgas einer Nachverbrennung unterzogen, u.zw. in der Nachverbrennungseinrichtung 25, in der ein Teil des gereinigten Exportgases unter Sauerstoffzuführung 26 verbrannt wird. Hierdurch erreicht das gereinigte Exportgas die für die Reduktion im zweiten Reduktions-Schachtofen 20 erforderliche Temperatur, die in einem Temperaturbereich zwischen 600 und 900°C liegt.

Das aus dem zweiten Reduktions-Schachtofen 20 abgezogene Topgas wird ebenfalls einer Reinigung und Kühlung im Exportgaswäscher 27 unterzogen, um es von Staubpartikeln zu säubern und den Wasserdampfgehalt zu erniedrigen, worauf es als Exportgas einer weiteren Verwendung zugeführt werden kann. Ein Teil des Exportgases wird über die Leitung 23 dem Wärmetauscher 22 zugeführt. Ein weiterer Teil des im zweiten Reduktions-Schachtofen 20 anfallenden Exportgases wird über einen Verdichter 28 ebenfalls der CO₂-Entfernungsanlage 17 zugeführt, u.zw. entweder direkt oder gemäß dem dargestellten Ausführungsbeispiel über die Förderleitung 29, die in die Exportgas-Ableitung 14 mündet, und steht dann nach der CO₂-Entfernung als Recycle-Reduktionsgas dem zweiten Reduktions-Schachtofen 20 zur Verfügung. Ein Teil des Exportgases des zweiten Reduktions-Schachtofens 20 wird über die Expongasleitung 30 anderen Verwendungszwecken zugeführt.

Ein Teil des im Einschmelzvergaser 3 gebildeten Reduktionsgases wird über eine Abzweigleitung 11, die von der Zuleitung 4 abzweigt, gemäß Fig. 1 einem Naßwäscher 32 zugeführt und nach Durchführung der Reinigung mit dem aus der CO₂-Entfernungsanlage 17 austretenden von CO₂ gereinigten Exportgas durch Münden der Abzweigleitung 31 in die Reduktionsgaszuleitung 19 gemischt. Die Mischung erfolgt vor Einmünden der Reduktionsgasleitung 19 in den Wärmetauscher 22, so daß der im Wäscher 32 abgekühlte Teil des im Einschmelzvergaser 3 gebildeten Reduktionsgases ebenfalls dem Wärmetauscher 22 und der nachgeordneten Nachverbrennungseinrichtung 25 zur Erhitzung auf die zur Direktreduktion erforderliche Temperatur zugeführt wird. In der Abzweigleitung 31 ist ein Pufferspeicher 31' vorgesehen, durch den der durch die Abzweigleitung 31 dem von CO₂ befreiten Exportgas (mit Recycle-Reduktionsgas) zugemischte Reduktionsgas-Volumensstrom weitgehend konstant gehalten werden kann. Der Pufferspeicher 31' kann als Hochdruck- oder auch als Niederdruckspeicher ausgebildet sein. Der Pufferspeicher 31' ist mittels einer Bypass-Leitung 31" überbrückbar.

Ein Teil des den Wäscher 32 verlassenden Reduktionsgases wird über eine Leitung 33 mit Verdichter 34 im Kreislauf wieder in die Zuleitung 4 eingespeist, um das in sehr heißem Zustand aus dem Einschmelzvergaser austretende Reduktionsgas vor Eintritt in die Gasreinigungseinrichtung 4' zu konditionieren, insbesondere auf einen für den Direktreduktionsprozeß im Schachtofen 1 günstigen Temperaturbereich zu kühlen. Über eine strichliert angedeutete Ausgleichsleitung 35 kann gegebenenfalls Reduktionsgas dem aus dem Schachtofen 1 austretenden Exportgas zwecks Konstanthaltung des Systemdruckes - unter Aufteilung des Druckstoßes in die Leitungen 35 und 31 - zugemischt werden.

Da erfindungsgemäß ein nicht unerheblicher Volumensstrom des dem zweiten Reduktions-Schachtofen 20 zugeführten Reduktionsgases nicht der CO₂-Entfernungsanlage 17 zugeführt, wird, sondern in Strömungsrichtung des Reduktionsgases erst danach mit dem aus der CO₂-Entfernungsanlage 17 kommenden Teil des Reduktionsgases gemischt wird, ist eine erhebliche Reduzierung der Größe der CO₂-Entfernungsanlage 17 möglich.

Erfindungsgemäß ergibt sich eine Einsparung bis etwa 30 % (unter besonderen Umständen auch mehr) der Investitionskosten für die CO₂-Entfernungsanlage 17. Ein weiterer wesentlicher Vorteil der Erfindung ist darin zu sehen, daß sich auch ein geringerer Volumensstrom des aus der CO₂-Entfernungsanlage 17 austretenden Abgases und damit auch eine Investitionseinsparung für die Entschwefelungseinrichtung 18 ergeben.

Zudem ergibt sich eine Erhöhung der Reduktantenausbeute des dem zweiten Schachtofen 20 zugeleiteten Reduktionsgases, da von dem Reduktionsgas, das dem Schachtofen 20 unter Umgehung der CO₂-Entfernungsanlage 17 zugeleitet wird, keine Reduktanten mit dem Abgas, der CO₂-Entfernungsanlage 17 ausgeschleust werden können. Damit ist auch ein höherer CO₂-Restgasgehalt im der CO₂-Entfernung unterzogenen Exportgas möglich, was weitere Einsparungen bei der Auslegung und auch beim Betrieb der CO₂-Entfernunganlage 17 mit sich bringt und eine größere Toleranzbreite für Schwankungen im Gehalt an CO₂ des von CO₂ gereinigten Exportgases ermöglicht. Hierdurch vereinfachen sich die Fahrweise und der regeltechnische Aufwand.

Insgesamt ergibt sich eine bessere Qualität des dem zweiten Schachtofen 20 zugeführten Reduktionsgases und damit eine höhere Produktivität.

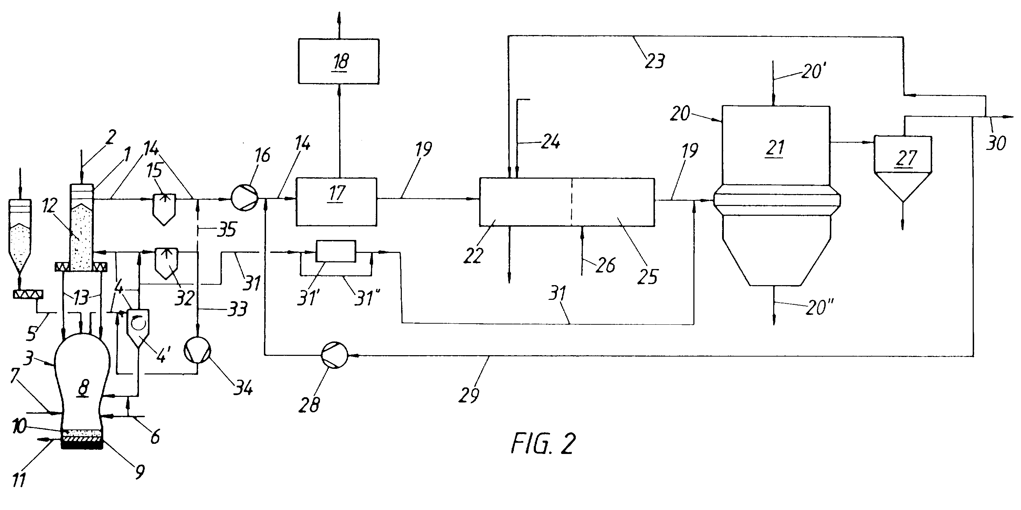

Gemäß der in Fig. 2 dargestellten Ausführungsform wird ein Teil des im Einschmelzvergaser gebildeten Reduktionsgases nach Durchtritt durch einen Staubentfernungszyklon 4' ungewaschen, d.h. ohne einen Wäscher zu durchströmen, im heißen Zustand dem aus Recycle-Reduktionsgas und von CO₂ gereinigtem Exportgas gebildeten Reduktionsgasgemisch über die Abzweigleitung 31 zugemischt, u.zw. nachdem dieses Reduktionsgasgemisch den Wärmetauscher 22 und die Nachverbrennungseinrichtung 25 passiert hat. Hierdurch kann zusätzlich zu den Vorteilen der in Fig. 1 dargestellten Ausführungsform die fühlbare Wärme des im Einschmelzvergaser 3 gebildeten Reduktionsgases dem Direktreduktionsprozeß im weiteren Reduktions-Schachtofen 20 zugeführt und damit wirkungsvoll genutzt werden.

Hierdurch lassen sich Einsparungen nicht nur bei Tier CO₂-Entfernungsanlage 17 und bei der Dimensionierung des Wärmetauschers 22 und der Nachverbrennungseinrichtung 25 erzielen, sondern es ergeben sich auch Energieeinsparungen beim Betrieb derselben.

Zwar weist das heiße abgezweigte Reduktionsgas nach Durchtritt durch den Staubentfernungszyklon 4' noch einen Reststaubgehalt auf, der jedoch in dem System, ohne Störungen zu bewirken, verkraftbar ist, da durch die Mischung dieses heißen abgezweigten Reduktionsgases mit dem Recycle-Reduktionsgas und dem der Reinigung von CO₂ unterworfenen Exportgas der Staubgehalt sehr verdünnt wird. Eine Beeinträchtigung des Direktreduktionsprozesses im zweiten Reduktions-Schachtofen 20 ist daher nicht zu befürchten.

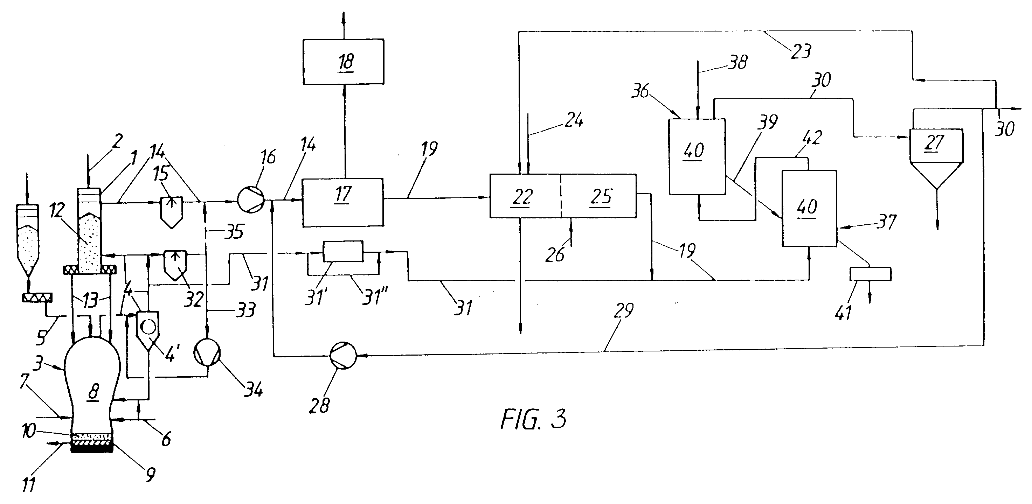

Gemäß der in Fig. 3 dargestellten Ausführungsform sind als breiterer bzw. zusätzlicher Reduktionsreaktor zwei in Serie hintereinander geschaltete Wirbelbettreaktoren 36, 37 vorgesehen, wobei Feinerz über eine Feinerz-Zuleitung 38 dem ersten Wirbelbettreaktor 36 und von diesem über eine Förderleitung 39 zum nachgeordneten Wirbelbettreaktor 37 geleitet wird. Das in den Wirbelbettreaktoren 36, 37 in jeweils einer Wirbelbett-Direktredulktionszone 40 reduzierte Material (Eisenschwamm) wird nach Fertigreduktion aus dem zweiten Wirbelbettreaktor 37 einer Brikettieranlage 41 zugeführt, wo es heiß- oder kaltbrikettiert wird Vor Einleitung des Feinerzes in den ersten Wirbelbettreaktor 36 wird es einer Erzvorbereitung, wie einer Trocknung, unterzogen, was jedoch nicht näher dargestellt ist.

Das über die Reduktionsgaszuleitung 19 dem Wirbelbettreaktor 37 zugeführte Reduktionsgas wird im Gegenstrom zum Erzdurchfluß vom Wirbelbettreaktor 37 zum Wirbelbettreaktor 36, d.h. den in den Wirbelbettreaktoren 36, 37 vorgesehenen Wirbelbett-Direktreduktionszonen 40, über die Gasleitung 42 geführt und als Topgas bzw. nach Reinigung als Exporgas uber eine Exportgas-Ableitung 30 aus dem in Erzflußrichtung ersten Wirbelbettreaktor 36 abgeleitet.

Die Erfindung beschränkt sich nicht auf die in der Figurenbeschreibung dargelegten Ausführungsbeispiele, sondern kann in verschiedener Hinsicht modifiziert werden. Beispielsweise ist es möglich, anstelle des im Festbettverfahren arbeitenden Schachtofens 1 auch eine Reduktion von Feinerz im Wirbelschichtverfahren vorzusehen, also den Schachtofen 1 durch einen oder mehrere Wirbelbettreaktoren zu ersetzen.

Weiters ist es auch möglich, den abgezweigten Teil des im Einschmelzvergaser gebildeten Reduktionsgases nicht nur einer Trockenentstaubung, sondern auch einer Wäsche zu unterziehen und im kalten Zustand nach der Heizeinrichtung 22, 25 dem der CO₂-Eliminierung und der Aufheizung unterzogenen Exportgas des Schachtofens 1 zuzumischen. In diesem Fall wird dieses Exportgas auf eine etwas höhere Temperatur aufgeheizt, so daß die Zumischung des abgezweigten kalten Teiles des Reduktionsgases ausgeglichen wird. Die Heizeinrichtung ist bei diesem Verfahren jedoch ebenfalls im wesentlichen nach dem Volumsstrom des Exportgases zu bemessen, so daß hierdurch ebenfalls Investitionskosten gegenüber dem Stand der Technik einsparbar sind.

Im Falle des Zurverfügungstehens von Erdgas könnte anstelle der CO₂-Entfernungsanlage 17 ein Reformer vorgesehen sein, wobei in diesem Fall eine separate Heizeinrichtung 22, 25 entfallen kann.

Nachstehend ist anhand zweier Beispiele das erfindungsgemäße Verfahren gegenüber dem Verfahren gemäß dem Stand der Technik näher erläutert:

### Beispiel gemäß Stand der Technik (Tabellenwerte gerundet):

Aus einem Schachtofen 1 einer beispielsweise gemäß der AT-B - 396.255 ausgestalteten Anlage wird Exportgas abgezogen, gewaschen und steht in einer Menge von 167.411 Nm³/h mit der in Tabelle I angegebenen chemischen Zusammensetzung zur Verfügung.

**Tabelle I**

| | |
|---|---|
| CO | 47 % |
| CO₂ | 25 % |
| H₂ | 22 % |
| H₂O | 2 % |
| H₂S | 100 ppm |
| CH₄ | 1 % |
| N₂, Ar | 3 % |

Dieses Gas wird nach dem Verdichten mit einem Verdichter einer CO₂-Wäsche in einer CO₂-Entfernungsanlage unterzogen.

Aus der CO₂-Entfernungsanlage entweicht CO₂-hältiges Abgas in einer Menge von 50.811 Nm³/h mit der in Tabelle II angegebenen chemischen Zusammensetzung, das zu entsorgen ist.

**Tabelle II**

| | |
|---|---|
| CO | 14 % |
| CO₂ | 77 % |
| H₂ | 3 % |
| H₂O | 5 % |
| H₂S | 317 ppm |
| CH₄ | 1 % |
| N₂, Ar | 1 % |

Das von CO₂ weitestgehend gereinigte Exportgas, das nunmehr als Reduktionsgas für einen weiteren Direktreduktionsprozeß in einer Menge von 115.643 Nm³/h zur Verfügung steht, weist eine chemische Zusammensetzung, wie sie in Tabelle III wiedergegeben ist, auf.

**Tabelle III**

| | |
|---|---|
| CO | 62 % |
| CO₂ | 3 % |
| H₂ | 30 % |
| H₂O | 0 % |
| H₂S | 6 ppm |
| CH₄ | 1 % |
| N₂, Ar | 4 % |

Dieses Reduktionsgas muß noch auf die für die Direktreduktion erforderliche Temperatur erhitzt werden. Nach der Erhitzung steht es in einer Menge von 116.585 Nm³/h und in der in Tabelle IV wiedergegebenen chemischen Zusammensetzung zur Verfügung.

**Tabelle IV**

| | |
|---|---|
| CO | 59 % |
| CO₂ | 5 % |
| H₂ | 28 % |
| H₂O | 2 % |
| H₂S | 6 ppm |
| CH₄ | 1 % |
| N₂, Ar | 4 % |

Bei diesem Beispiel wird kein aus dem weiteren Reduktionsprozeß entstehendes Expongas recycliert, d.h. der CO₂-Entfernungsanlage zugeführt, um abermals als Reduktionsgas für den weiteren Direktreduktionsprozeß zur Verfügung zu stehen.

### Beispiel gemäß der Erfindung (Tabellenwerte gerundet):

Aus einem Schachtofen 1 tritt Exportgas aus, das gewaschen in einer Menge von 127.458 Nm³/h mit der in Tabelle V angegebenen chemischen Zusammensetzung zur weiteren Verwendung zur Verfügung steht.

**Tabelle V**

| | |
|---|---|
| CO | 42 % |
| CO₂ | 32 % |
| H₂ | 20% |
| H₂O | 2% |
| H₂S | 100 ppm |
| CH₄ | 1 % |
| N₂, Ar | 3 % |

Dieses bereits einer Waschung unterzogene Exportgas wird mittels des Verdichters 16 verdichtet und einer CO₂-Entfernung, wie einer CO₂-Druckwechsel-Adsorption in der CO₂-Entfernungsanlage 17, unterworfen.

Aus der CO₂-Entfernungsanlage 17 entweicht Abgas in einer Menge von 47.011 Nm³/h, das die chemische Zusammensetzung gemäß Tabelle VI aufweist.

**Tabelle VI**

| | |
|---|---|
| CO | 10 % |
| CO₂ | 82 % |
| H₂ | 2 % |
| H₂O | 4 % |
| H₂S | 261 ppm |
| CH₄ | 1 % |
| N₂, Ar | 1 % |

Das aus der CO₂-Entfernungsanlage austretende Exportgas, das über die Leitung 19 einer Reduktionszone 21 eines weiteren Direktreduktionsprozesses zugeführt wird, fällt in einer Menge von 79.718 Nm³/h mit der in Tabelle VII angegebenen chemischen Zusammensetzung an.

**Tabelle VII**

| | |
|---|---|
| CO | 61 % |
| CO₂ | 3 % |
| H₂ | 30 % |
| H₂O | 0% |
| H₂S | 6 ppm |
| CH₄ | 1 % |
| N₂, Ar | 4 % |

Erfindungsgemäß wird über die Leitung 31 aus dem Einschmelzvergaser 8 austretendes Reduktionsgas abgezweigt, u.zw, in einer Menge von 39.952 Nm³/h und mit der in Tabelle VIII angegebenen chemischen Zusammensetzung.

**Tabelle VIII**

| | |
|---|---|
| CO | 63 % |
| CO₂ | 3 % |
| H₂ | 29 % |
| H₂O | 2 % |
| H₂S | 200 ppm |
| CH₄ | 1 % |
| N₂, Ar | 2 % |

Dieses abgezweigte Reduktionsgas wird mit dem aus der CO₂-Entfernungsanlage 17 austretenden. von CO₂ weitestgehend gereinigten Exportgas vermischt und bildet so das Reduktionsgas für die weitere Direktreduktionszone 21. Es steht in einer Menge von 119.670 Nm³/h zur Verfügung und weist die in Tabelle IX angegebene chemische Zusammensetzung auf.

**Tabelle IX**

| | |
|---|---|
| CO | 62 % |
| CO₂ | 3 % |
| H₂ | 30 *%* |
| H₂O | 1 % |
| H₂S | 71 ppm |
| CH₄ | 1 % |
| N₂, Ar | 4 % |

Dieses Mischreduktionsgas muß nunmehr einer Aufheizung in der Heizeinrichtung 22 bzw. Nachverbrennungseinrichtung 25 unterzogen werden. Nach der Erhitzung wird es in einer Menge von 120.622 Nm³/h mit der in Tabelle X angegebenen chemischen Zusammensetzung in den zweiten Schachtofen 20 eingeleitet und dient dort zur Direktreduktion in der Reduktionszone 21.

**Tabelle X**

| | |
|---|---|
| CO | 59 % |
| CO₂ | 5 % |
| H₂ | 28 % |
| H₂O | 2 % |
| H₂S | 70 ppm |
| CH₄ | 1 % |
| N₂, Ar | 4 % |

Auch bei diesem erfindungsgemäßen Ausführungsbeispiel ist das der weiteren Reduktionszone 21 zugeführte Reduktionsgas frei von Recycle-Reduktionsgas, d.h. daß aus der weiteren Reduktionszone 21 austretendes Exportgas nicht, wie in den Fig. 1 und 2 dargestellt, über die Leitung 29 der CO₂-Entfernungsanlage 17 zugeführt wird, sondern es wird ausschließlich für externe Verbraucher zur Verfügung gestellt.

Wie aus dem Vergleich der beiden Beispiele zu erkennen ist, ergeben sich durch das erfindungsgemäße Verfahren gegenüber dem Stand der Technik die nachstehend aufgelisteten Vorteile:
- Der Exportgas-Verdichter 16 kann auf ¾ der Kapazität ausgelegt werden.
- Die getrennte Führung des aus dem Schachtofen 1 abgezogenen Exportgases und des aus dem Einschmelzvergaser 3 abgezweigten Reduktionsgases bewirkt eine Verkleinerung regeltechnischer Schwankungen, damit kann
- der Verdichter 16 gleichmäßiger betrieben werden,
- der Verdichter 16 mit weniger Reserve ausgelegt werden,
- die Regelung des Verdichters 16 vereinfacht werden,
- der Druckabfall über die CO₂-Entfernungsanlage 17 wegen geringerer Volumensschwankungen, die verarbeitet werden müssen, besser konstant gehalten werden und
- der Betrieb der CO₂-Entfernungsanlage 17 ruhiger gehalten werden, wodurch die Anlage leichter betrieben werden kann.
- Der elektrische Stromverbrauch/t Produkt sinkt um ungefähr 15 %, da
- der Motor für den Verdichter 16 um mehr als 25 % kleiner dimensionien werden kann und gleichmäßiger belastet wird.
- Für die Reduktanten im über die Leitung 31 zugeleiteten Reduktionsgas ist die Ausbeute 100 %, wodurch sich eine höhere Produktion von ungefähr 3 bis 4 % ergibt.
- Speicherbehälter für der zweiten Reduktionszone 21 zugeführtes Reduktionsgas werden für eine bessere Beaufschlagung der Heizeinrichtung 22, 25 besser genützt.
- Die CO₂-Entfernungsanlage 17 kann wesentlich kleiner dimensioniert werden.
- Die CO₂-Entfernungsanlage 17 hat im zugeleiteten Exportgas einen höheren CO₂-Partialdruck.
- Ein Rest-CO₂-Gehalt im CO₂-gereinigten Expongas muß nicht so genau eingehalten werden: Schwankungen werden durch über die Leitung 31 zugeführtes Reduktionsgas "verdünnt", d.h. ausgeglichen.
- Im Abgas der CO₂-Entfernungsanlage 17 ist der H₂S-Gehalt geringer und
- es fällt weniger Abgas an.

## Patentansprüche

1. Verfahren zur Herstellung von flüssigem Roheisen oder flüssigen Stahlvorprodukten und Eisenschwamm aus von Eisenerz, vorzugsweise in Stück- und/oder Pelletform, und gegebenenfalls Zuschlägen gebildeten Einsatzstoffen, wobei die Einsatzstoffe in einer ersten Reduktionszone (12) zu Eisenschwamm direkt reduziert werden, der Eisenschwamm in einer Einschmelzvergasungszone (8) unter Zufuhr von Kohlenstoffträgern und sauerstoffhältigem Gas erschmolzen und ein CO- und H₂-hältiges Reduktionsgas erzeugt wird, welches in die erste Reduktionszone (12) eingeleitet, dort umgesetzt und als Exportgas abgezogen wird, und wobei das abgezogene Exportgas einer CO₂-Eliminierung unterzogen und als zumindest weitgehend CO₂-freies Reduktionsgas gemeinsam mit einem Teil des in der Einschmelzvergasungszone (8) gebildeten Reduktionsgases zur Erzeugung von Eisenschwamm ausschließlich einer weiteren Reduktionszone (21) zur Direktreduktion von Eisenerz zugeführt wird, dadurch gekennzeichnet, daß von dem Teil des in der Einschmelzvergasungszone (8) erzeugten und ausschließlich der weiteren Reduktionszone (21) zugeführten Reduktionsgases ein Teil abgezweigt und der weiteren Reduktionszone (21) unter Umgehung der CO₂-Eliminierung zugeleitet wird und daß das der CO₂-Eliminierung unterzogene Exportgas aufgeheizt wird.

2. Verfahren nach Anspruch 1, dadurch gekennzeichnet, daß in der weiteren Reduktionszone (21) Eisenschwamm nach dem Festbett-Verfahren aus Eisenerz, vorzugsweise in Stück- und/oder Pelletform, erzeugt wird (Fig. 1, 2).

3. Verfahren nach Anspruch 2, dadurch gekennzeichnet, daß der abgezweigte Teil des Reduktionsgases vor Einleitung in die weitere Festbett-Direktreduktionszone (21) mit dem der CO₂-Eliminierung unterzogenen Exportgas unter Bildung eines Misch-Reduktionsgases vermischt wird.

4. Verfahren nach Anspruch 3, dadurch gekennzeichnet, daß der abgezweigte Teil des Reduktionsgases einer Entstaubung und einer Wäsche unterzogen wird und das Misch-Reduktionsgas einer Aufheizung unterworfen wird (Fig. 1).

5. Verfahren nach Anspruch 1 oder 2, dadurch gekennzeichnet, daß nur das der CO₂-Eliminierung unterzogene Exportgas einer Aufheizung unterzogen wird und nach der Aufheizung mit dem abgezweigten Teil des Reduktionsgases, das sowohl die CO₂-Eliminierung als auch die Aufheizung umgeht, vermischt wird (Fig. 2, 3).

6. Verfahren nach Anspruch 5, dadurch gekennzeichnet, daß der abgezweigte Teil des Reduktionsgases lediglich einer Entstaubung, jedoch keiner Wäsche, unterzogen wird (Fig. 2, 3).

7. Verfahren nach Anspruch 5, dadurch gekennzeichnet, daß der abgezweigte Teil des Reduktionsgases einer Entstaubung und einer Wäsche unterzogen wird und das der CO₂-Eliminierung unterzogene Exportgas auf eine Temperatur aufgeheizt wird, die etwas über der gewünschten Reduktionsgastemperatur für die weitere Reduktionszone (21) liegt.

8. Verfahren nach einem oder mehreren der Ansprüche 1 bis 7, dadurch gekennzeichnet, daß der abgezweigte Teil des Reduktionsgases hinsichtlich eines Überschusses vor Einleitung in die weitere Reduktionszone (21) gespeichert wird.

9. Verfahren nach einem oder mehreren der Ansprüche 1 bis 8, dadurch gekennzeichnet. daß Druckschwankungen in der Einschmelzvergasungszone (8) durch Zumischen eines Teiles des in der Einschmelzvergasungszone (8) gebildeten Reduktionsgases zum aus der Reduktionszone (12) abgezogenen Exportgas vor Durchführung der CO₂-Eliminierung des Exportgases ausgeglichen werden.

10. Verfahren nach einem oder mehreren der Ansprüche 1, 5, 6, 7, 8, 9, dadurch gekennzeichnet, daß in der weiteren Reduktionszone Feinerz im Wirbelbettverfahren (40) reduziert wird und das abgezweigte Reduktionsgas der weiteren Reduktionszone unter Umgehung der Aufheizung des Exportgases zugeleitet wird (Fig. 3).

11. Verfahren nach Anspruch 10, dadurch gekennzeichnet, daß die Direktreduktion im Wirbelbettverfahren zwei- oder mehrstufig durchgeführt wird (Fig. 3).

12. Anlage zur Durchführung des Verfahrens nach einem oder mehreren der Ansprüche 1 bis 11, mit einem Reduktionsofen (1) für Eisenerz, vorzugweise in Stück- und/oder Pelletform, einem Einschmelzvergaser (3), einer den Einschmelzvergaser mit dem Reduktionsofen (1) verbindenden Zuleitung (4) für ein Reduktionsgas, einer den Reduktionsofen (1) mit dem Einschmelzvergaser (3) verbindenden Förderleitung (13) für das im Reduktionsofen (1) gebildete Reduktionsprodukt, mit einer vom Reduktionsofen (1) ausgehenden Expongas-Ableitung (14), die in eine CO₂-Eliminierungsanlage (17) mündet, mit in den Einschmelzvergaser (3) mündenden Zuleitungen (6, 7) für sauerstoffhältige Gase und Kohlenstoffträger, einem am Einschmelzvergaser (3) vorgesehenen Abstich (11) für Roheisen (9) und Schlacke (10), und mit mindestens einem zusätzlichen Reduktionsreaktor (20; 36, 37) zur Aufnahme von Eisenerz, einer von der CO₂-Eliminierungsanlage (17) ausgehenden Reduktionsgas-Zuleitung (19) zu diesem Reduktionreaktor (20; 36, 37), wobei die CO₂-Eliminierungsanlage (17) ausschließlich mit dem zusätzlichen Reduktionsreaktor (20, 36, 37) leitungsmäßig verbunden ist, einer Abgas-Ableitung (30) aus diesem Reduktionsreaktor (20; 36, 37) und einer Austragsvorrichtung für das in diesem Reduktionsreaktor (211; 36, 37) gebildete Reduktionsprodukt, dadurch gekennzeichnet, daß die Reduktionsgas-Zuleitung (19) des zusätzlichen Reduktionsreaktors (20; 36, 37) über eine Heizeinrichtung (22, 25) für das von CO₂ gereinigte Exportgas in den zusätzlichen Reduktionsreaktor (20; 36, 37) mündet, und daß von der den Einschmelzvergaser (3) mit dem Reduktionsofen (1) verbindenden Zuleitung (4) für das Reduktionsgas eine Zweigleitung (31) ausgeht, die unter Umgehung der CO₂-Eliminierungsanlage (17) in die Reduktionsgas-Zuleitung (19) des zusätzlichen Reduktionsreaktors (20; 36, 37) mündet.

13. Anlage nach Anspruch 12, dadurch gekennzeichnet, daß der zusätzliche Reduktionsreaktor als Festbettreaktor (20) für Eisenerz vorzugsweise in Stück- oder Pelletform, insbesondere als Schachtofen (20), ausgebildet ist (Fig. 1, 2).

14. Anlage nach Anspruch 12 oder 13, dadurch gekennzeichnet, daß die Zweigleitung (31) sowohl unter Umgehung der CO₂-Eliminierungsanlage (17) als auch unter Umgehung der Heizeinrichtung (22), die gegebenenfalls eine Nachverbrennungseinnchtung (25) inkludiert, in die Reduktionsgas-Zuleitung (19) des zusätzlichen Reduktionsreaktors (20; 36, 37) mündet (Fig. 2, 3).

15. Anlage nach Anspruch 12 oder 14, dadurch gekennzeichnet, daß der zusätzliche Reduktionsreaktor als Wirbelbettreaktor (36, 37) ausgebildet ist (Fig. 3).

16. Anlage nach Anspruch 15, dadurch gekennzeichnet, daß zwei oder mehr Wirbelbettreaktoren (36, 37) in Serie geschaltet vorgesehen sind (Fig. 3).

17. Anlage nach einem oder mehreren der Ansprüche 12 bis 16, dadurch gekennzeichnet. daß in der Abzweigleitung (31) ein Pufferspeicher (31') vorgesehen ist.

18. Anlage nach Anspruch 17, dadurch gekennzeichnet, daß der Pufferspeicher (31') mit einer Bypass-Leitung (31") überbrückbar ist.

19. Anlage nach einem oder mehreren der Ansprüche 12 bis 18, dadurch gekennzeichnet, daß die Zweigleitung (31) über eine Ausgleichsleitung (35) mit der Exportgasableitung (14) vor Einmünden derselben in die CO₂-Eliminierungsanlage (17) verbindbar ist.

20. Verfahren zur Herstellung eines handelsfähigen Produktes, wie Walzgut, erzeugt aus Roheisen oder Stahlvorprodukten, hergestellt nach einem Verfahren nach einem der Ansprüche 1 bis 11.

## Claims

1. A process for the production of molten pig iron or molten steel pre-products and sponge iron from charging materials consisting of iron ore, preferably lumpy and/or pelletized iron ore, and, if desired, fluxes, wherein direct reduction of the charging materials to sponge iron is carried out in a first reduction zone (12), the sponge iron is melted in a meltdown gasifying zone (8) under supply of carbon carriers as well as an oxygen-containing gas and a CO- and H₂-containing reducing gas is produced which is fed to the first reduction zone (12), is reacted there and is drawn off as an export gas, and wherein the drawn-off export gas is subjected to CO₂ elimination and for the production of sponge iron is along with part of the reducing gas formed in the meltdown gasifying zone (8) as an at least largely CO₂ free reducing gas conveyed exclusively to a further reduction zone (21) for the direct reduction of iron ore, characterized in that from the part of the reducing gas produced in the meltdown gasifying zone (8) and conveyed exclusively to the further reduction zone (21) a portion is branched off and fed to the further reduction zone (21) while avoiding CO₂ elimination and that the export gas subjected to CO₂ elimination is heated.

2. A process according to claim 1, characterized in that in the further reduction zone (21) sponge iron is produced from iron ore, preferably lumpy and/or pelletized iron ore, utilizing the fixed-bed method (Fig. 1, 2).

3. A process according to claim 2, characterized in that the branched-off portion of the reducing gas prior to being introduced into the further fixed-bed direct reduction zone (21) is mixed with the export gas subjected to CO₂ elimination under formation of a mixed reducing gas.

4. A process according to claim 3, characterized in that the branched-off portion of the reducing gas is subjected to dedustification and scrubbing and the mixed reducing gas is subjected to heating (Fig. 1).

5. A process according to claim 1 or 2, characterized in that only the portion of the export gas subjected to CO₂ elimination is subjected to heating and after having been heated is mixed with the branched-off portion of the reducing gas which avoids both CO₂ elimination and heating (Fig. 2, 3).

6. A process according to claim 5, characterized in that the branched-off portion of the reducing gas is only subjected to dedustification but not to scrubbing (Fig. 2, 3).

7. A process according to claim 5, characterized in that the branched-off portion of the reducing gas is subjected to dedustification and scrubbing and the export gas subjected to CO₂ elimination is heated up to a temperature lying slightly above the desired temperature for the reducing gas for the further reduction zone (21).

8. A process according to one or several of claims 1 to 7, characterized in that, in view of a possible excess supply, the branched-off portion of the reducing gas is stored prior to being introduced into the further reduction zone (21).

9. A process according to one or several of claims 1 to 8, characterized in that deviations in pressure within the meltdown gasifying zone (8) are balanced out by admixing a portion of the reducing gas formed in the meltdown gasifying zone (8) to the export gas drawn off the reduction zone (12) prior to effecting the CO₂ elimination of the export gas.

10. A process according to one or several of claims 1, 5, 6, 7, 8, 9, characterized in that in the further reduction zone fine ore is reduced in the fluidized bed process (40) and the branched-off reducing gas is supplied to the further reduction zone while avoiding heating of the export gas (Fig. 3).

11. A process according to claim 10, characterized in that direct reduction in the fluidized bed process is effected in two or several steps (Fig. 3).

12. A plant for carrying out the process according to one or several of claims 1 to 11, including a reduction furnace (1) for iron ore, preferably lumpy and/or pelletized iron ore, a melter gasifier (3), a feed duct (4) for a reducing gas connecting the melter gasifier with the reduction furnace (1), a conveying duct (13) for the reduction product produced in the reduction furnace (1) connecting the reduction furnace (1) with the melter gasifier (3), with an export gas-discharge duct (14) departing from the reduction furnace (1) and opening into a CO₂ elimination plant (17), with feed ducts (6, 7) for oxygen-containing gases and carbon carriers running into the melter gasifier (3), a tap (11) for pig iron (9) and slag (10) being provided at the melter gasifier (3), and with at least one additional reduction reactor (20; 36, 37) intended to receive iron ore, a reducing gas feed duct (19) departing from the CO₂ elimination plant (17) and leading to the reduction reactor (20; 36, 37), with the CO₂ elimination plant (17) being flow-connected exclusively with the additional reduction reactor (20; 36, 37), an offgas discharge duct (30) leading out of this reduction reactor (20; 36, 37) and a discharging means for the reduction product formed in this reduction reactor (20; 36, 37), characterized in that the reducing gas-feed duct (19) of the additional reduction reactor (20; 36, 37) runs into the additional reduction reactor (20; 36, 37) via a heating means (22, 25) for the export gas freed from CO₂, and that from the feed duct (4) for the reducing gas connecting the melter gasifier (3) with the reduction furnace (1) a branch duct (31) departs which runs into the reducing gas feed duct (19) of the additional reduction reactor (20; 36, 37) while avoiding the CO₂ elimination plant (17).

13. A plant according to claim 12, characterized in that the additional reduction reactor is designed as a fixed-bed reactor (20) for iron ore, preferably lumpy or pelletized iron ore, in particular as a shaft furnace (20) (Fig. 1, 2).

14. A plant according to claim 12 or 13, characterized in that the branch duct (31) runs into the reducing gas feed duct (19) of the additional reduction reactor (20; 36, 37) while avoiding both the CO₂ elimination plant (17) and the heating means (22) which may optionally include an afterburning means (25) (Fig. 2, 3).

15. A plant according to claim 12 or 14, characterized in that the additional reduction reactor is designed as a fluidized bed reactor (36, 37) (Fig. 3).

16. A plant according to claim 15, characterized in that two or several fluidized bed reactors (36, 37) are provided which are connected in series (Fig. 3).

17. A plant according to one or several of claims 12 to 16, characterized in that a compensation tank (31') is provided in the branch duct (31).

18. A plant according to claim 17, characterized in that the compensation tank (31') may be bypassed by a bypass duct (31").

19. A plant according to one or several of claims 12 to 18, characterized in that the branch duct (31) is connectible with the export gas discharge duct (14) via a compensating duct (35) prior to the entry of the same into the CO₂ elimination plant (17).

20. A process for the production of a commercially apt product, such as rolling stock, produced from pig iron or steel pre-products, produced by a process according to one of claims 1 to 11.

## Revendications

1. Procédé de production de fonte brute liquide ou de préproduits d'acier liquide et d'éponge de fer à partir de matériaux de charge formés d'un minerai de fer, de préférence sous forme de morceaux et/ou d'agglomérés, et éventuellement d'additifs, dans lequel les matériaux de charge sont directement réduits en éponge de fer dans une première zone de réduction (12), l'éponge de fer est mise en fusion dans une zone de gazéification pendant fusion (8), avcc apport de composés du carbone et de gaz à teneur d'oxygène, et est produit un gaz ce réduction à teneur de CO et H₂, qui est introduit dans la première zone de réduction (12), y réagit et est évacué sous forme de gaz d'export, et dans lequel le gaz d'export évacué est soumis à une élimination du CO₂ puis, sous forme de gaz de réduction au moins largement exempt de CO₂ et en commun avec une partie du gaz de réduction formé dans la zone de gazéification pendant fusion (8) pour la production d'éponge de fer, amené exclusivement à une autre zone de réduction (21) pour la réduction directe du minerai de fer, caractérisé par le fait que, de la partie du gaz de réduction produit dans la zone de gazéification pendant fusion (8) et amené exclusivement à l'autre zone de réduction (21), une partie est dérivée et amenée à l'autre zone de réduction (21) en bypassant l'élimination du CO₂, et que l'on chauffe le gaz d'export soumis à l'élimination du CO₂.

2. Procédé selon la revendication 1, caractérisé par le fait que dans l'autre zone de réduction (21), on produit de l'éponge de fer selon le procédé à lit fixe à partir du minerai de fer, de préférence sous forme de morceaux et/ou d'agglomérés (figures 1, 2).

3. Procédé selon la revendication 2, caractérisé par le fait qu'avant introduction dans l'autre zone de réduction directe à lit fixe (21), on mélange la partie, dérivée, du gaz de réduction avec le gaz d'export soumis à l'élimination du CO₂, ce qui donne un gaz de réduction mixte.

4. Procédé selon la revendication 3, caractérisé par le fait que l'on soumet la partie, dérivée, du gaz de réduction à un dépoussiérage et à un lavage et que l'on soumet le gaz de réduction mixte à un chauffage (figure 1).

5. Procédé selon la revendication 1 ou 2, caractérisé par le fait que seul le gaz d'export soumis à l'élimination du CO₂ est soumis à un chauffage et, après le chauffage, mélangé avec la partie dérivée du gaz de réduction, qui bypasse aussi bien l'élimination du CO₂ que le chauffage (figure 2, 3).

6. Procédé selon la revendication 5, caractérisé par le fait que la partie, dérivée, du gaz de réduction n'est soumise qu'à un dépoussiérage mais non à un lavage (figure 2, 3).

7. Procédé selon la revendication 5, caractérisé par le fait que la partie, dérivée, du gaz de réduction est soumise à un dépoussiérage et à un lavage et que le gaz d'export soumis à l'élimination du CO₂ est chauffé à une température qui se situe un peu au-delà de la température du gaz de réduction désirée pour l'autre zone de réduction (21).

8. Procédé selon une ou plusieurs des revendications 1 à 7, caractérisé par le fait qu'avant introduction dans l'autre zone de réduction (21), on stocke l'excès de la partie, dérivée, du gaz de réduction.

9. Procédé selon une ou plusieurs des revendications 1 à 8, caractérisé par le fait que l'on compense des variations de pression dans la zone de gazéification pendant fusion (8) en mélangeant une partie du gaz de réduction formé dans la zone de gazéification pendant fusion (8) au gaz d'export évacué de la zone de réduction (12), avant de procéder à l'élimination du CO₂ du gaz d'export.

10. Procédé selon une ou plusieurs des revendications 1, 5, 6, 7, 8, 9, caractérisé par fait que dans l'autre zone de réduction on réduit des fines de minerai par le procédé à lit fluidisé (40) et que l'on amène le gaz de réduction, dérivé, à l'autre zone de réduction en bypassant le chauffage du gaz d'export (figure 3).

11. Procédé selon la revendication 10, caractérisé par le fait que l'on procède à la réduction directe par le procédé à lit fluidisé en deux ou plusieurs étages (figure 3).

12. Installation de mise en oeuvre du procédé selon une ou plusieurs des revendications 1 à 11, comportant un four de réduction (1) pour le minerai de fer, de préférence sous forme de morceaux et/ou d'agglomérés, un gazéificateur pendant fusion (3), une conduite d'arrivée (4) pour un gaz de réduction, reliant le gazéificateur pendant fusion avec le four de réduction (1), une conduite de transport (13) pour le produit de réduction formé dans le four de réduction (1), reliant le four de réduction (1) avec le gazéificateur pendant fusion (3), comportant une conduite de départ (14) de gaz d'export qui sort du four de réduction (1) et débouche dans une installation d'élimination du CO₂ (17), comportant des conduites d'arrivée (6,7), débouchant dans le gazéificateur pendant fusion (3), pour des gaz à teneur d'oxygène et des composés du carbone, une coulée (11) pour la fonte brute (9) et pour le laitier (10) prévue sur le gazéificateur pendant fusion (3), et comportant au moins un réacteur de réduction supplémentaire (20, 36, 37) pour recevoir du minerai de fer, une conduite de gaz de réduction (19), partant de l'installation d'élimination du CO₂ (17) et arrivant à ce réacteur de réduction (20, 36, 37), l'installation d'élimination du CO₂ (17) étant exclusivement reliée, par conduite, avec le réacteur de réduction supplémentaire (20, 36, 37), une conduite (30) de départ du gaz perdu partant de ce réacteur de réduction supplémentaire (20, 36, 37) et un dispositif de décharge pour le produit de réduction formé dans ce réacteur de réduction supplémentaire (20, 36, 37), caractérisée par le fait que la conduite (19) d'arrivée du gaz de réduction du réacteur de réduction supplémentaire (20, 36, 37) débouche, en passant par un dispositif de chauffage (22, 25) pour le gaz d'export épuré du CO₂, dans le réacteur de réduction supplémentaire (20, 36, 37) et que de la conduite d'arrivée (4) pour le gaz de réduction, reliant le gazéificateur pendant fusion (3) avec le four de réduction (1), part une conduite de dérivation (31) qui, en bypassant l'installation d'élimination du CO₂ (17), débouche dans la conduite d'arrivée du gaz de réduction (19) du réacteur de réduction supplémentaire (20, 36, 37).

13. Installation selon la revendication 12, caractérisée par le fait que le réacteur de réduction supplémentaire est conçu sous forme d'un réacteur à lit fixe (20) pour du minerai de fer, de préférence sous forme de morceaux ou d'agglomérés, en particulier sous forme de four à cuve (8) (figures 1, 2).

14. Installation selon l'une des revendications 12 ou 13, caractérisée par le fait que la conduite de dérivation (31) débouche dans la conduite d'arrivée du gaz de réduction (19) du réacteur de réduction supplémentaire (20, 36, 37) en bypassant aussi bien l'installation d'élimination du CO₂ (17) que le dispositif de chauffage (22) qui inclut éventuellement un dispositif de postcombustion (25) (figures 2, 3).

15. Installation selon l'une des revendications 12 ou 14, caractérisée par le fait que le réacteur de réduction supplémentaire est conçu sous forme de réacteur à lit fluidisé (36, 37) (figure 3).

16. Installation selon la revendication 15, caractérisée par le fait que deux, ou davantage, réacteurs à lit fluidisé (36, 37) sont prévus montés en série (3).

17. Installation selon une ou plusieurs des revendications 12 à 16, caractérisée par le fait que dans la conduite de dérivation (31) est prévu un réservoir tampon (31').

18. Installation selon la revendication 17, caractérisée par le fait que le réservoir tampon (31') peut être bypassé par une conduite de bypass (31").

19. Installation selon une ou plusieurs des revendications 12 à 18, caractérisée par le fait que la conduite de dérivation (31) peut être reliée, par l'intermédiaire d'une conduite d'équilibrage (35), avec la conduite de départ du gaz d'cxport (14) avant que celle-ci ne débouche dans l'installation d'élimination du CO₂ (17).

20. Procédé de fabrication d'un produit commercial, comme un produit laminé, obtenu à partir de fonte brute ou de préproduits de l'acier, fabriqué selon un procédé conforme à l'une des revendications 1 à 11.
